# EUROPÄISCHE PATENTSCHRIFT

(11) **EP 4 275 650 B1**
(45) Veröffentlichungstag und Bekanntmachung des Hinweises auf die Patenterteilung: **29.04.2026**
(21) Anmeldenummer: 22172471.9
(22) Anmeldetag: 10.05.2022
(51) Int. Cl.: A61C 13/15

(54) **DENTALHANDGERÄT ZUM HÄRTEN EINES POLYMERS**
DENTAL HAND TOOL FOR CURING A POLYMER
APPAREIL DENTAIRE PORTATIF PERMETTANT DE DURCIR UN POLYMÈRE

(43) Veröffentlichungstag der Anmeldung: 15.11.2023
(73) Patentinhaber: Ivoclar Vivadent AG, 9494 Schaan (LI)
(72) Erfinder: SENN, Bruno, 19056 Gais (CH); BENZ, Oliver, 9494 Schaan (LI)
(74) Vertreter: Baldus, Oliver

(56) Entgegenhaltungen:
- US-A1- 2002 175 628
- US-A1- 2004 076 921
- US-A1- 2007 031 777

## Beschreibung

Die vorliegende Erfindung betrifft ein Dentalhandgerät zum Härten eines Polymers mittels Lichts.

Die Druckschrift US 2007/031777 A1 betrifft eine multifunktionale zahnärztliche Vorrichtung, die Zahnlaser und LEDs umfasst. Das multifunktionale Dentalgerät umfasst Dentallaser zum Aushärten von Dentalharz und Leuchtdioden zum Aushärten von Dentalharz.

Die Druckschrift US 2002/175628 A1 betrifft Lichtsysteme zum Aktivieren lichtaktivierter Materialien.

Die Druckschrift US 2004/076921 A1 betrifft eine Lampe, die zum Härten von Materialien aus lichtaktivierten Verbindungen verwendet wird.

Es ist die technische Aufgabe der vorliegenden Erfindung, ein Dentalhandgerät effizienter und energiesparender zu gestalten.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Dentalhandgerät zum Härten eines Polymers mittels Lichts gelöst, mit einer ersten Lichtquelle, die eine Laserdiode zum Ausgeben von Licht in einem ersten Wellenlängenbereich umfasst; und einer zweiten Lichtquelle zum Ausgeben von Licht in einem zweiten Wellenlängenbereich; wobei das Intensitätsmaximum des ersten Wellenlängenbereichs zwischen 440 und 460 nm liegt und das Intensitätsmaximum des zweiten Wellenlängenbereichs zwischen 400 und 420 nm liegt. Das Dentalhandgerät umfasst nur zwei Lichtquellen mit jeweils nur einem Intensitätsmaximum.

Der Lichtstrahl der Laserdiode weitet sich nur wenig auf. Durch die Kombination einer Laserdiode und einer Leuchtdiode wird weniger Wärme erzeugt und die Effizienz des Dentalhandgerät gesteigert. Es werden sowohl eine bessere Aushärtung direkt an der Oberfläche als auch eine höhere Oberflächengüte erreicht. Das Dentalhandgerät kann mit einem kleineren Akku und mit geringerem Materialaufwandhergestellt werden. Durch die Laserdiode können auch Füllungen in einem größeren Abstand wirkungsvoll gehärtet werden, eine Divergenz des ausgegebenen Lichtes klein ist**.** Durch eine Kombination mit einer weiteren Lichtquelle kann das Dentalhandgerät ein breites Spektrum erzeugen. Durch den ersten Wellenlängenbereich wird beispielsweise der technische Vorteil erreicht, dass dieser Wellenlängenbereich mit einer Laserdiode effizient erzeugt werden kann. Es entsteht eine geringere Wärmeentwicklung und ein niedrigerer Energieverbrauch. Zudem werden eine geradlinigere Abstrahlung und vorteilhafte Eindringtiefe erzielt. Durch den zweiten Wellenlängenbereich wird beispielsweise der technische Vorteil erreicht, dass eine bessere Aushärtung direkt an der Oberfläche und eine höhere Oberflächengüte erreicht werden.

In einer weiteren vorteilhaften Ausführungsform des Dentalhandgerätes weist die erste Lichtquelle eine höhere Strahlungsleistung als die zweite Lichtquelle auf. Dadurch wird beispielsweise der technische Vorteil erreicht, dass das Dentalhandgerät für möglichst viele Materialien unabhängig von einem Initiatorsystem einsetzbar ist.

In einer weiteren vorteilhaften Ausführungsform des Dentalhandgerätes umfasst die zweite Lichtquelle eine Laserdiode oder eine Leuchtdiode. Dadurch wird beispielsweise der technische Vorteil erreicht, dass besonders geeignete Lichtquellen verwendet werden.

In einer weiteren vorteilhaften Ausführungsform des Dentalhandgerätes ist das Dentalhandgerät ausgebildet, die erste und die zweite Lichtquelle gleichzeitig zu betreiben. Dadurch wird beispielsweise der technische Vorteil erreicht, dass das Härten des Polymers beschleunigt und/oder eine Verbesserung der physikalischen Eigenschaften erreicht wird.

In einer weiteren vorteilhaften Ausführungsform des Dentalhandgerätes umfasst das Dentalhandgerät ein Bündel aus lichtleitenden Fasern. Dadurch wird beispielsweise der technische Vorteil erreicht, dass das Licht der beiden Lichtquellen effizient zu dem auszuhärtenden Polymer gelangen kann.

In einer weiteren vorteilhaften Ausführungsform des Dentalhandgerätes ist die Laserdiode derart angeordnet, dass das Licht der Laserdiode auf die lichtleitenden Fasern des Bündels trifft. Dadurch wird beispielsweise der technische Vorteil erreicht, dass die Homogenität des austretenden Lichtes verbessert wird.

In einer weiteren vorteilhaften Ausführungsform des Dentalhandgerätes liegen die Strahlrichtung der ersten und der zweiten Lichtquelle senkrecht zueinander. Dadurch wird beispielsweise der technische Vorteil erreicht, dass sich die Lichtstrahlen der beiden Lichtquellen auf einfache Weise überlagern lassen.

In einer weiteren vorteilhaften Ausführungsform des Dentalhandgerätes umfasst das Dentalhandgerät einen Strahlkoppler zum Überlagern der Lichtstrahlen der beiden Lichtquellen. Dadurch wird beispielsweise der technische Vorteil erreicht, dass die Lichtquellen an unterschiedlichen Stellen angeordnet sein können und sich nicht gegenseitig stören.

In einer weiteren vorteilhaften Ausführungsform des Dentalhandgerätes umfasst der Strahlkoppler ein Kantenfilter. Dadurch wird beispielsweise der technische Vorteil erreicht, dass bestimmte Wellenlängenbereiche des Lichtstrahls absorbiert werden können.

In einer weiteren vorteilhaften Ausführungsform des Dentalhandgerätes umfasst das Dentalhandgerät eine Kollimationslinse zum Parallelisieren des Lichts von der ersten und/oder zweiten Lichtquelle. Dadurch wird beispielsweise der technische Vorteil erreicht, dass parallele Lichtstrahlen erzeugt werden können, die sich auf einfache Weise überlagern lassen.

In einer weiteren vorteilhaften Ausführungsform des Dentalhandgerätes umfasst das Dentalhandgerät einen Reflektor zum Reflektieren des Lichts und /oder eine Linse zum Kollimieren des Lichtes. Dadurch wird beispielsweise der technische Vorteil erreicht, dass eine Austrittspupille homogen ausgeleuchtet wird und/oder eine gute Kollimation des Austretenden Lichtes erreicht wird.

In einer weiteren vorteilhaften Ausführungsform des Dentalhandgerätes werden der Reflektor und die Linse durch ein einstückiges optisches Element gebildet. Dadurch wird beispielsweise der technische Vorteil erreicht, dass sich der Aufbau des Dentalhandgerätes vereinfacht.

Ein Dentalverfahren zum Härten eines Polymers mittels Lichts, welches nicht Teil der beanspruchten Erfindung ist, umfasst die Schritte eines Ausgebens von Licht in einem ersten Wellenlängenbereich durch eine erste Lichtquelle, die eine Laserdiode umfasst; und eines Ausgebens von Licht in einem zweiten Wellenlängenbereich durch eine zweite Lichtquelle.

Ausführungsbeispiele der Erfindung sind in den Zeichnungen dargestellt und werden im Folgenden näher beschrieben.

Es zeigen:
- Fig. 1: eine Darstellung eines Dentalhandgeräts;
- Fig. 2: ein Spektrum eines erzeugten Lichtes;
- Fig. 3: ein Blockdiagramm eines Verfahrens;
- Fig. 4: eine schematische Darstellung einer Ausführungsform eines Dentalhandgeräts; und
- Fig. 5: eine weitere schematische Darstellung einer Ausführungsform eines Dentalhandgeräts.

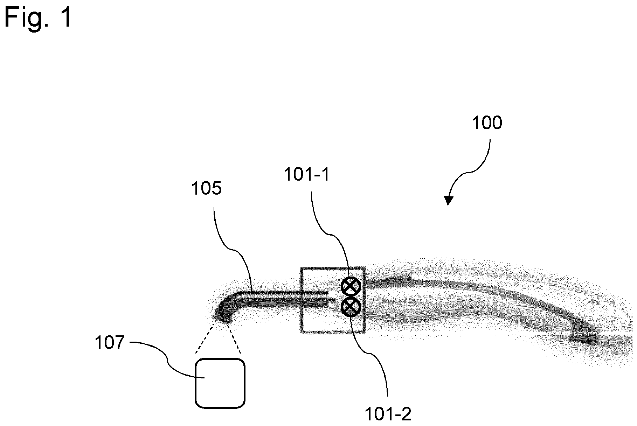

Fig. 1 zeigt eine Darstellung eines Dentalhandgeräts 100 zum Härten eines Polymers mittels Lichts. Das Dentalhandgerät 100 umfasst eine erste Lichtquelle 101-1, die eine Laserdiode zum Ausgeben von Licht in einem ersten Wellenlängenbereich 103-1 umfasst. Zudem umfasst das Dentalhandgerät 100 eine zweite Lichtquelle 101-2 zum Ausgeben von Licht in einem zweiten Wellenlängenbereich 103-2. Die ersten und die zweite Lichtquelle 101-1 und 101-2 sind im Inneren des Dentalhandgeräts 100 angeordnet. Die Wellenlängenbereiche 103-1 und 103-2 sind unterschiedlich zueinander, aber können sich teilweise überlappen.

Das Licht der beiden Lichtquellen 101-1 und 101-2 wird durch einen Lichtleiter 105 zu einem Polymer 107 geleitet, das photoinduziert ausgehärtet werden soll, wie beispielsweise eine Zahnfüllung. Zum Versorgen der beiden Lichtquellen 101-1 und 101-2 umfasst das Dentalhandgerät 100 beispielsweise einen Akkumulator. Die beiden Lichtquellen 101-1 und 101-2 können unabhängig voneinander durch eine entsprechende Steuerelektronik gesteuert werden.

Die zweite Lichtquelle 101-2 kann eine Laserdiode oder eine Leuchtdiode umfassen. Das Dentalhandgerät ist ausgebildet, die erste und die zweite Lichtquelle 101-1 und 101-2 gleichzeitig zu betreiben. Auf diese Weise können die Spektren der jeweiligen Lichtquellen 101-1 und 101-2 überlagert werden und zusammen durch das Dentalhandgerät 100 ausgegeben werden.

Eine Leuchtdiode ist ein Halbleiter-Bauelement, das Licht mittels spontaner Emission ausstrahlt, wenn elektrischer Strom in Durchlassrichtung fließt. In Gegenrichtung sperrt die Leuchtdiode. Die Wellenlänge des emittierten Lichts hängt vom Halbleitermaterial und der Dotierung der Diode ab. Als Leuchtdiode kann beispielsweise eine Indium-Gallium-Nitrid-Leuchtdiode (InGaN) zum Emittieren von Licht mit einer Wellenlänge von 460 nm oder 410 nm verwendet werden.

Eine Laserdiode ist ein Halbleiter-Bauteil, das kohärente Laserstrahlung mittels stimulierter Emission erzeugt. In Laserdioden wird ein p-n-Übergang mit starker Dotierung bei hohen Stromdichten betrieben. Die Endflächen des Bauelements sind teilreflektierend und bilden somit einen optischen Resonator, in dem sich eine stehende Lichtwelle ausbilden kann. Die Wahl des Halbleitermaterials bestimmt dabei die emittierte Wellenlänge. Als Laserdiode kann beispielsweise eine blau Laserdiode auf Basis von Galliumnitrid verwendet werden. Das Licht der Laserdiode weist beispielsweise einen Öffnungswinkel von 0 bis 5° auf. Durch die gerichtete Strahlung der Laserdiode kann die Intensität über einen größeren Abstand aufrechterhalten werden. Zudem wird eine größere Eindringtiefe in das Polymer erreicht.

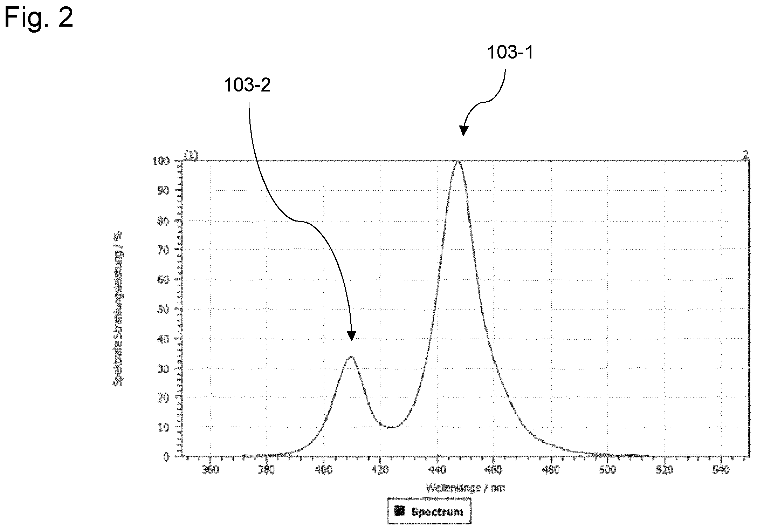

Fig. 2 zeigt eine spektrale Strahlungsleistung des Dentalhandgerät 100 in Abhängigkeit der jeweiligen Wellenlänge. Die spektrale Strahlungsleistung weist zwei Spitzen (Peaks) auf. Der erste Peak befindet sich bei einer Wellenlänge von 450 nm und wird durch die erste Lichtquelle 101-1 erzeugt. Der zweite Peak befindet sich bei einer Wellenlänge von 410 nm und wird durch die zweite Lichtquelle 101-2 erzeugt. Der Peak des Wellenlängenbereichs 103-1 weist eine höhere Leistung als der Peak des zweiten Wellenlängenbereichs auf 103-2. Die erste Lichtquelle 101-1 ist ausgebildet, Licht mit einer höheren Leistung als die zweite Lichtquelle 101-2 zu erzeugen.

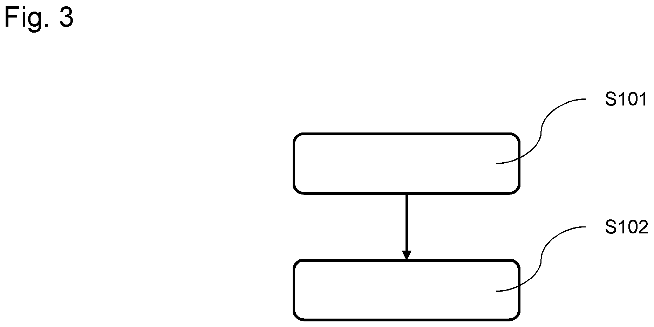

Fig. 3 zeigt ein Blockdiagramm eines Dentalverfahren zum Härten eines Polymers mittels Lichts. Das Dentalverfahren umfasst den Schritte S101 eines Ausgebens von Licht in dem ersten Wellenlängenbereich 103-1 durch die erste Lichtquelle 101-1, die eine Laserdiode umfasst. Weiter umfasst das Dentalverfahren den Schritt S102 eines Ausgebens von Licht in einem zweiten Wellenlängenbereich durch eine zweite Lichtquelle 101-2.

Mittels einer Laserdiode als Lichtquelle 101-1 wird das Hauptlicht für die Durchhärtung erzeugt in einem Wellenlängenbereich um 450 nm herum erzeugt. Mit einer weiteren Lichtquelle 101-2, die eine Leuchtdiode oder Laserdiode umfasst, wird Licht in einem zweiten Wellenlängenbereich um 410 nm herum erzeugt. Das Licht der beiden Lichtquellen 101-1 und 101-2 wird mit einer Optik zum lichthärtbaren Dentalmaterial geleitet.

Die Laserdiode weist eine höhere Effizienz auf, so dass ein Akku des Dentalgeräts 100 länger ausreicht. Zudem ist die Lichtabgabe der Laserdiode 101-2 gerichtet. Da die Divergenz des ausgegebenen Lichtes klein ist, können auch Füllungen in einem größeren Abstand wirkungsvoll gehärtet werden.

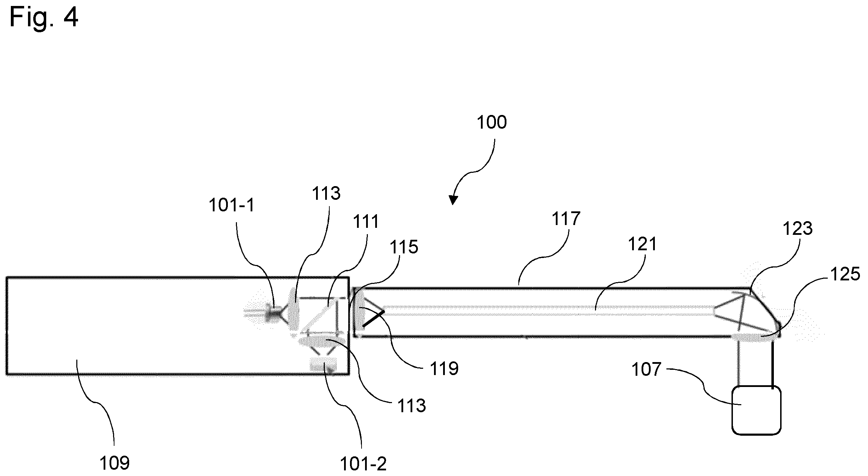

Fig. 4 zeigt eine schematische Darstellung einer Ausführungsform eines Dentalhandgeräts 100. Das Dentalhandgeräts 100 umfasst ein Handteil 109. In dem Handteil 109 befindet sich die erste Lichtquelle 101-1 mit einer Laserdiode, die Licht mit einer Wellenlänge von 450 nm aussendet. Zudem befindet sich in dem Handteil die zweite Lichtquelle mit einer Leuchtdiode, die Licht mit einer Wellenlänge von 405 nm aussendet.

Das Licht mit der Wellenlänge von 450 nm und das Licht mit der Wellenlänge von 405 nm werden jeweils durch Kollimationslinsen 113 geleitet. Die Kollimationslinsen 113 dienen zur Erzeugung von Licht mit annähernd parallelem Strahlengang aus den Lichtquellen 101-1 und 101-2. Diese Kollimation dient dazu, dem Licht eine bestimmte Richtung zu geben.

Anschließend wird das parallele Licht der beiden Lichtquellen 101-1 und 101-2 über ein Kantenfilter 111 als Strahlkoppler zur Wellenlängenkopplung geleitet. Durch das Kantenfilter 111 werden die Lichtstrahlen der beiden Lichtquellen 101-1 und 101-2 überlagert und in die gleiche Richtung geleitet. Das Kantenfilter 111 besitzt zwei mehr oder weniger scharf voneinander getrennte Spektralbereiche, in denen das Kantenfilter transmittiert (durchlässig ist) beziehungsweise absorbiert (undurchlässig ist). Der Strahlkoppler ist beispielsweise durch eine Scheibe gebildet, die in einem Winkel von 45° im Strahlengang der beiden Lichtquellen 101-1 und 101-2 angeordnet ist. Der Lichtstrahl der Laserdiode passiert die Scheibe geradlinig, während der Lichtstrahl von der Leuchtdiode von der Oberfläche des Strahlkopplers reflektiert wird. Auf diese Weise lassen sich die Lichtstrahlen der Laserdiode und der Leuchtdiode effizient überlagern. Das Kantenfilter 111 sperrt beispielsweise in einem Wellenlängenbereich ab einer Wellenlänge, die größer als die Wellenlänge ist, die von der Lichtquelle 101-1 emittiert wird.

Aus dem Handteil 109 tritt ein kollimierter (paralleler) Lichtstrahl 115 aus. Dieser Lichtstrahl 115 wird in einen Beleuchtungskopf 117 geleitet. Der Beleuchtungskopf umfasst eine Fokussierlinse 119, mit der der Lichtstrahl 115 gebündelt wird.

Im Inneren des Beleuchtungskopfes 117 ist ein Bündel aus lichtleitenden Fasern 121 angeordnet. Der fokussierte Lichtstrahl tritt in das Bündel aus lichtleitenden Fasern 121 ein. Das Bündel aus lichtleitenden Fasern 121 dient dazu, das Licht von dem Handteil 109 an die Stelle zu leiten, an der sich das Polymer 107 befindet.

Die Laserdiode des Dentalhandgerätes 100 beleuchtet dabei nur die inneren Fasern des Bündels 121. Dadurch tritt das Licht der Laserdiode nur in die inneren Fasern des Bündels 121 ein. Zu diesem Zweck kann das Dentalhandgerät 100 beispielsweise eine Lochblende umfassen, die bewirkt, dass das Licht der Laserdiode lediglich auf einen inneren Teil der lichtleitenden Fasern 121 trifft, während ein äußerer Teil der lichtleitenden Fasern 121 unbeleuchtet bleibt. Die äußeren Fasern 121 des Bündels 121 bleiben von der Laserdiode unbeleuchtet. Das Licht der Leuchtdiode tritt hingegen nicht nur in den inneren Teil der der lichtleitenden Fasern 121, sondern auch in den äußeren Teil der lichtleitenden Fasern 121 ein. Dadurch kann eine größere Homogenität am Austritt und eine bessere Abstrahlcharakteristik erreicht werden.

Das Licht aus dem Bündel 121 tritt anschließend aus diesem aus und trifft auf einen Reflektor 123, wie beispielsweise in einer parabolischen Form. Durch den Reflektor 123 kann eine Austrittspupille homogen ausgeleuchtet werden. Nach der Reflexion tritt der Lichtstrahl aus dem Beleuchtungskopf 117 über eine Linse 125 aus. Durch die Linse 125 wird eine erneute Kollimation erreicht. Der Reflektor 123 und die Linse 125 können aus einem einzigen transparenten Teil hergestellt sein, wie beispielsweise durch ein einstückiges optisches Element.

Durch diesen Aufbau werden eine hohe Homogenität in der Austrittspupille, ein kleiner Feldwinkel und eine gute Kollimation erreicht. An der Schnittstelle zwischen Handteil 109 und Beleuchtungskopf 117 entsteht ein kollimierter Lichtstrahl. Es kann polychromes Licht mit einer hohen Leistung vom Dentalgerät 100 ausgegeben werden.

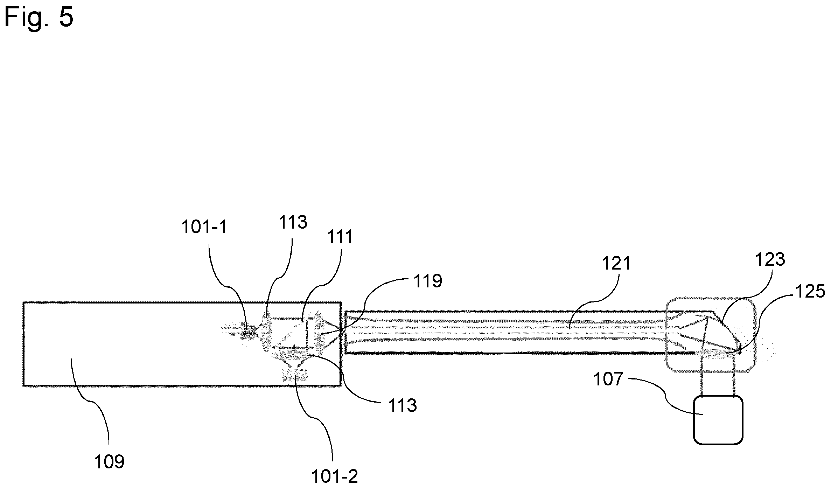

Fig. 5 zeigt eine weitere schematische Darstellung einer Ausführungsform eines Dentalhandgeräts. In dieser Ausführungsform ist die Fokussierlinse 119 im Inneren des Handteil 109 angeordnet. Dadurch wird von dem Handteil 109 ein fokussierter Lichtstrahl and der Schnittstelle zwischen Handteil 109 und Beleuchtungskopf 117 ausgegeben.

Im Beleuchtungskopf 117 ist ebenfalls ein Bündel aus lichtleitenden Fasern 121 angeordnet. Die Laserdiode beleuchtet die Fasern des Bündels 121. Der Beleuchtungskopf 117 kann elastisch ausgebildet sein und unterschiedliche Durchmesser aufweisen. Dadurch kann die Beleuchtung des Polymers 107 auch an unzugänglichen Stellen durchgeführt werden. Der Beleuchtungskopf 117 kann durch ein Spritzgussformteil gebildet sein.

Auch in dieser Ausführungsform des Dentalgerätes 100 werden eine hohe Homogenität in der Austrittspupille, ein kleiner Feldwinkel und eine gute Kollimation erreicht. An der Schnittstelle zwischen Handteil 109 und Beleuchtungskopf 117 entsteht ein fokussierter Lichtstrahl, der sich auf einfache Weise in die lichtleitenden Fasern 121 einkoppeln lässt. Zudem kann polychromes Licht mit einer hohen Leistung vom Dentalgerät 100 ausgegeben werden.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentalhandgerät
- 101: Lichtquelle
- 103: Wellenlängenbereich
- 105: Lichtleiter
- 107: Polymer
- 109: Handteil
- 111: Kantenfilter
- 113: Kollimationslinsen
- 115: Lichtstrahl
- 117: Beleuchtungskopf
- 119: Fokussierlinse
- 121: Bündel aus lichtleitenden Fasern
- 123: Reflektor
- 125: Linse

## Patentansprüche

1. Dentalhandgerät (100) zum Härten eines Polymers (107) mittels Lichts, mit:
- einer ersten Lichtquelle (101-1), die eine Laserdiode zum Ausgeben von Licht in einem ersten Wellenlängenbereich (103-1) umfasst; und
- einer zweiten Lichtquelle (101-2) zum Ausgeben von Licht in einem zweiten Wellenlängenbereich (103-2);
wobei das Intensitätsmaximum des ersten Wellenlängenbereichs (103-1) zwischen 440 und 460 nm liegt und das Intensitätsmaximum des zweiten Wellenlängenbereichs (103-2) zwischen 400 und 420 nm liegt,
**dadurch gekennzeichnet, dass**
das Dentalhandgerät (100) nur zwei Lichtquellen (101-1, 101-2) mit jeweils nur einem Intensitätsmaximum umfasst.

2. Dentalhandgerät (100) nach Anspruch 1, wobei die erste Lichtquelle (101-1) eine höhere Strahlungsleistung als die zweite Lichtquelle (101-2) aufweist.

3. Dentalhandgerät (100) nach einem der vorangehenden Ansprüche, wobei die zweite Lichtquelle (101-2) eine Laserdiode oder eine Leuchtdiode umfasst.

4. Dentalhandgerät (100) nach einem der vorangehenden Ansprüche, wobei das Dentalhandgerät (100) ausgebildet ist, die erste und die zweite Lichtquelle (101-1, 101-2) gleichzeitig zu betreiben.

5. Dentalhandgerät (100) nach einem der vorangehenden Ansprüche, wobei das Dentalhandgerät (100) ein Bündel aus lichtleitenden Fasern (121) umfasst.

6. Dentalhandgerät (100) nach Anspruch 5, wobei die Laserdiode derart angeordnet ist, dass das Licht der Laserdiode auf die lichtleitenden Fasern (121) des Bündels trifft.

7. Dentalhandgerät (100) nach einem der vorangehenden Ansprüche, wobei die Strahlrichtung der ersten und der zweiten Lichtquelle (101-1; und 101-2) senkrecht zueinander liegen.

8. Dentalhandgerät (100) nach einem der vorangehenden Ansprüche, wobei das Dentalhandgerät (100) einen Strahlkoppler (111) zum Überlagern der Lichtstrahlen der beiden Lichtquellen (101-1) und (101-2) umfasst.

9. Dentalhandgerät (100) nach Anspruch 8, wobei der Strahlkoppler (111) ein Kantenfilter umfasst.

10. Dentalhandgerät (100) nach einem der vorangehenden Ansprüche, wobei das Dentalhandgerät (100) eine Kollimationslinse (113) zum Parallelisieren des Lichts von der ersten und/oder zweiten Lichtquelle (101-1, 101-2) umfasst.

11. Dentalhandgerät (100) nach einem der vorangehenden Ansprüche, wobei das Dentalhandgerät (100) einen Reflektor (123) zum Reflektieren des Lichts und /oder eine Linse (125) zum Kollimieren des Lichtes umfasst.

12. Dentalhandgerät (100) nach Anspruch 11, wobei der Reflektor (123) und die Linse (125) durch ein einstückiges optisches Element gebildet werden.

## Claims

1. A dental handheld device (100) for curing a polymer (107) by means of light, comprising:
- a first light source (101-1) comprising a laser diode for outputting light in a first wavelength range (103-1); and
- a second light source (101-2) for outputting light in a second wavelength range (103-2);
wherein the intensity maximum of the first wavelength range (103-1) is between 440 and 460 nm und the intensity maximum of the second wavelength range (103-2) is between 400 and 420 nm, **characterized in that**
the dental handheld device (100) comprises only two light sources (101-1, 101-2) with only one intensity maximum, respectively.

2. The dental handheld device (100) according to claim 1, wherein the first light source (101-1) has a higher radiation power than the second light source (101-2).

3. The dental handheld device (100) according to any one of the preceding claims, wherein the second light source (101-2) comprises a laser diode or a light emitting diode.

4. The dental handheld device (100) according to any one of the preceding claims, wherein the dental handheld device (100) is adapted to operate the first and second light sources (101-1, 101-2) simultaneously.

5. The dental handheld device (100) according to any one of the preceding claims, wherein the dental handheld device (100) comprises a bundle of light conducting fibers (121).

6. The dental handheld device (100) according to claim 5, wherein the laser diode is arranged such that the light from the laser diode is incident on the light conducting fibers (121) of the bundle.

7. The dental handheld device (100) according to any one of the preceding claims, wherein the beam directions of the first and second light sources (101-1; and 101-2) are perpendicular to each other.

8. The dental handheld device (100) according to any one of the preceding claims, wherein the dental handheld device (100) comprises a beam coupler (111) for superimposing the light beams of the two light sources (101-1) and (101-2).

9. The dental handheld device (100) according to claim 8, wherein the beam coupler (111) comprises an edge filter.

10. The dental handheld device (100) according to any one of the preceding claims, wherein the dental handheld device (100) comprises a collimating lens (113) for collimating the light from the first and/or second light source (101-1, 101-2).

11. The dental handheld device (100) according to any one of the preceding claims, wherein the dental handheld device (100) comprises a reflector (123) for reflecting the light and/or a lens (125) for collimating the light.

12. The dental handheld device (100) according to claim 11, wherein the reflector (123) and the lens (125) are formed by a one-piece optical element.

## Revendications

1. Dispositif dentaire portatif (100) destiné à durcir un polymère (107) à l'aide de lumière, comprenant :
- une première source lumineuse (101-1) comprend une diode laser destinée à émettre de la lumière dans une première gamme de longueurs d'onde (103-1) ; et
- une deuxième source lumineuse (101-2) destinée à émettre de la lumière dans une deuxième plage de longueurs d'onde (103-2) ;
- où l'intensité maximale de la première plage de longueurs d'onde (103-1) se situe entre 440 et 460 nm et l'intensité de la deuxième plage de longueurs d'onde (103-2) se situe entre 400 et 420 nm,
**caractérisé en ce que**
le dispositif dentaire portatif (100) ne comprend que deux sources lumineuses (101-1, 101-2) qui présentent chacune une seule intensité maximale.

2. Dispositif dentaire portatif (100) selon la revendication 1, où la première source lumineuse (101-1) présente une puissance de rayonnement supérieure à celle de la deuxième source lumineuse (101-2).

3. Dispositif dentaire portatif (100) selon l'une des revendications précédentes, où la deuxième source lumineuse (101-2) comprend une diode laser ou une diode électroluminescente.

4. Dispositif dentaire portatif (100) selon l'une des revendications précédentes, où le dispositif dentaire portatif (100) est conçu pour faire fonctionner simultanément les première et deuxième sources lumineuses (101-1, 101-2).

5. Dispositif dentaire portatif (100) selon l'une des revendications précédentes, où le dispositif dentaire portatif (100) comprend un faisceau de fibres optiques (121).

6. Dispositif dentaire portatif (100) selon la revendication 5, où la diode laser est disposée de telle sorte que la lumière de la diode laser frappe les fibres optiques (121) du faisceau.

7. Dispositif dentaire portatif (100) selon l'une des revendications précédentes, où les directions de rayonnement des première et deuxième sources lumineuses (101-1 et 101-2) sont perpendiculaires l'une à l'autre.

8. Dispositif dentaire portatif (100) selon l'une des revendications précédentes, où le dispositif dentaire portatif (100) comprend un coupleur de faisceaux (111) destiné à superposer les faisceaux lumineux des deux sources lumineuses (101-1) et (101-2).

9. Dispositif dentaire portatif (100) selon la revendication 8, où le coupleur de faisceaux (111) comprend un filtre de coupure.

10. Dispositif dentaire portatif (100) selon l'une des revendications précédentes, où le dispositif dentaire portatif (100) comprend une lentille de collimation (113) destinée à rendre parallèle la lumière provenant de la première et/ou de la deuxième source lumineuse (101-1, 101-2).

11. Dispositif dentaire portatif (100) selon l'une des revendications précédentes, où le dispositif dentaire portatif (100) comprend un réflecteur (123) destiné à réfléchir la lumière et/ou une lentille (125) destinée à collimater la lumière.

12. Dispositif dentaire portatif (100) selon la revendication 11, où le réflecteur (123) et la lentille (125) sont formés par un élément optique monobloc.
